# EUROPEAN PATENT SPECIFICATION

(11) **EP 4 481 880 B1**
(45) Date of publication and mention of the grant of the patent: **12.08.2026**
(21) Application number: 23898228.4
(22) Date of filing: 27.11.2023
(51) Int. Cl.: H01M 10/04, H01M 10/058, H01M 50/403, H01M 50/46, H01M 50/466, H01M 50/586, H01M 50/59, H01M 10/052

(54) **ELECTRODE ASSEMBLY COMPRISING SURFACE-TREATED SEPARATOR, SECONDARY BATTERY COMPRISING SAME, AND ELECTRODE ASSEMBLY MANUFACTURING METHOD**
ELEKTRODENANORDNUNG MIT OBERFLÄCHENBEHANDELTEM SEPARATOR, SEKUNDÄRBATTERIE DAMIT UND ELEKTRODENANORDNUNGSHERSTELLUNGSVERFAHREN
ENSEMBLE ÉLECTRODE COMPRENANT UN SÉPARATEUR TRAITÉ EN SURFACE, BATTERIE SECONDAIRE LE COMPRENANT, ET PROCÉDÉ DE FABRICATION D'ENSEMBLE ÉLECTRODE

(30) Priority: 02.12.2022 KR 20220166693
(43) Date of publication of application: 25.12.2024
(73) Proprietor: LG Energy Solution, Ltd., Seoul 07335 (KR)
(72) Inventor: LEE, Sang Kyun, Daejeon 34122 (KR); KIM, Ki Tae, Daejeon 34122 (KR); LEE, Young Hwan, Daejeon 34122 (KR); LEE, Hun Hyeong, Daejeon 34122 (KR)
(74) Representative: Plasseraud IP
(86) International application number: PCT/KR2023/019189
(87) International publication number: WO 2024/117702

(56) References cited:
- EP-A1- 3 336 951
- EP-A1- 4 027 420
- CN-A- 101 563 799
- CN-A- 113 644 321
- KR-A- 20000 071 221
- KR-A- 20180 006 324
- KR-A- 20180 086 364
- KR-A- 20210 047 208

## Description

### [Technical Field]

This application claims the benefit of priority based on Korean Patent Application No. 10-2022-0166693, filed on December 02, 2022.

The present invention relates to an electrode assembly comprising a surface treated separator, a secondary battery comprising the same, and a method of manufacturing the electrode assembly.

### [Background Art]

In recent years, due to the depletion of fossil fuels, the price of energy sources is rising, environmental pollution is becoming an increasing concern, at the same time as the demand for eco-friendly alternative energy sources is becoming an indispensable factor for future life. Therefore, research on various power generation technologies such as nuclear power, solar power, wind power, and tidal power is ongoing, and power storage devices for more efficient use of the energy generated are also of great interest.

In particular, the demand for batteries as an energy source is increasing rapidly as technology develops and demand for mobile devices increases, and accordingly, research is being conducted on batteries that can meet various needs.

In terms of battery shape, there is a high demand for prismatic and pouch-type secondary batteries, which can be applied to products such as mobile phones due to their thin thickness, and in terms of materials, there is a high demand for lithium secondary batteries such as lithium-ion batteries and lithium-ion polymer batteries, which have advantages such as high energy density, discharge voltage, and output stability.

In general, a secondary battery is a structure in which an electrode assembly including a positive electrode, a negative electrode, and a separator disposed between them is embedded inside a cell case, with the positive and negative electrode tabs sealed to expose extended positive and negative electrode leads, respectively.

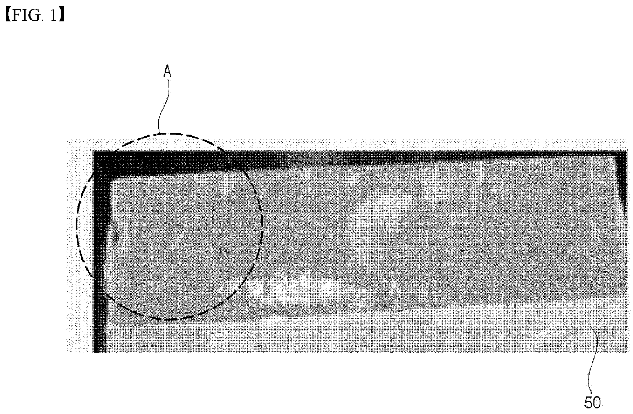

Meanwhile, the electrode assembly includes a structure in which a positive electrode, a separator, and a negative electrode are sequentially stacked. FIG. 1 is a schematic diagram illustrating a folding phenomenon of a separator of an electrode assembly. Referring to FIG. 1, in the electrode assembly 1, the separator 50 is folded due to various process flows that occur during the manufacturing of the secondary battery. In particular, the edge region A of the separator 50 is particularly induced to fold.

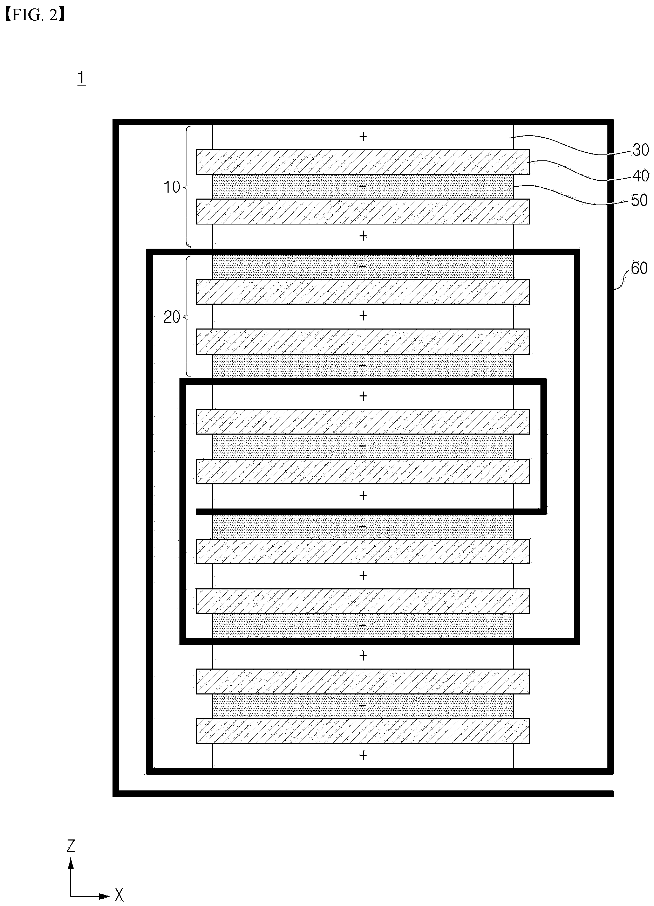

FIG. 2 is a schematic drawing illustrating a front view of a conventional electrode assembly. Referring to FIG. 2, the folded electrode assembly 1 is a structure that includes a positive electrode 30, a negative electrode 40, and a plurality of unit cells wound into a sheet-like separator sheet 60 with a separator 50 interposed between the positive electrode 30 and the negative electrode 40. Here, the unit cell includes an A-type bicell 10 stacked in the order of positive electrode 30/separator 50/negative electrode 40/separator 50/positive electrode 30, and a C-type bicell 20 stacked in the order of negative electrode 40/separator 50/positive electrode 30/separator 50/negative electrode 40.

The conventional electrode assembly 1 has a problem of low adhesion between the electrode and the separator 50 due to the absence of a separate adhesive layer on the separator 50. To solve this problem, unit cells with stacked electrodes and separator 50 are sometimes laminated, heat pressed or the like to achieve excessive dry adhesion. In this case, however, although the adhesion between the electrodes of the unit cell and the separator 50 can be greatly improved, processes such as lamination or heat press are performed on the front surface of the electrodes and the separator 50, which greatly reduces the electrolyte impregnation and gas release, and may cause performance degradation of the secondary battery such as Li plating. EP4027420A1 and EP3336951A1 disclose electrode assemblies.

Therefore, it is necessary to develop a method that can improve the adhesion between the separator and the electrode interface while providing good electrolyte impregnation and preventing the separator from folding.

### [Disclosure]

### [Technical Problem]

The present invention aims to solve the above problems, and provides an electrode assembly capable of preventing folding of a separator, a secondary battery including the same, and a method for manufacturing the electrode assembly.

### [Technical Solution]

The present invention provides an electrode assembly applicable to a secondary battery. In one embodiment, an electrode assembly according to the present invention is a stack structure having n stacked unit cells including a positive electrode, a negative electrode, and a separator interposed between the positive and negative electrodes, wherein n is an integer greater than or equal to 2, and a separator sheet is disposed between the unit cells. The n is an integer in the range of 2 to 20, for example. A separator embedded within a unit cell, including an adhesive portion with a corona surface treatment and a non-adhesive portion without a corona surface treatment, wherein the separator sheet is a structure without a corona surface treatment.

The present invention also provides a secondary battery including the electrode assembly described above. For example, the secondary battery is a pouch-type secondary battery. In addition, the present invention provides a method of manufacturing an electrode assembly for a secondary battery. In one embodiment, a method of manufacturing an electrode assembly according to the present invention includes the performing a corona discharge on one or both sides of a separator to surface treatment; forming a unit cell including a positive electrode, a negative electrode, and a separator sheet interposed between the positive and negative electrodes; and manufacturing the electrode assembly by positioning n unit cells (where n is an integer greater than or equal to 2) on a sheet-like separator sheet and winding the separator sheet in one direction. Here, the separator embedded in the unit cell includes a corona surfaced adhesive portion and a non-corona surfaced non-adhesive portion. Further, the separator sheet is a structure without corona surface treatment.

### [Advantageous Effects]

The present invention increases the interfacial adhesion between electrodes and separators which form electrode assembly without reducing their impregnability to electrolyte.

### [Brief Description of the Drawings]

FIG. 1 is a schematic diagram illustrating a separator folding phenomenon that occurs within a conventional electrode assembly.
FIG. 2 is a schematic diagram illustrating a stacked structure of a conventional electrode assembly.
FIG. 3 is a schematic diagram illustrating a stacked structure of an electrode assembly, according to one embodiment.
FIG. 4 is a schematic diagram illustrating an electrode assembly manufacturing process.
FIG. 5 is a schematic diagram illustrating an electrode stacking structure according to one embodiment.
FIG. 6 is a schematic diagram illustrating an adhesion pattern of a separator located inside a unit cell, according to one embodiment.
FIG. 7 is a schematic diagram illustrating a stacked structure of an electrode assembly, according to one embodiment.
FIG. 8 is a schematic diagram illustrating an adhesion pattern of a separator according to one embodiment.
FIG. 9 is a schematic diagram illustrating the process of corona treating the surface of a separator.

### [Best Mode]

The present invention provides an electrode assembly applicable to a secondary battery. In one embodiment, an electrode assembly according to the invention is a stack structure having n stacked unit cells including a positive electrode, a negative electrode, and a separator interposed between the positive and negative electrodes, wherein n is an integer greater than or equal to 2, and a separator sheet is disposed between the unit cells. The n is, for example, an integer in the range of 2 to 20. A separator embedded within a unit cell, including an adhesive portion with a corona surface treatment and a non-adhesive portion without a corona surface treatment, wherein the separator sheet is a structure without a corona surface treatment.

In one embodiment, the separator sheet is a structure wound between the stacked unit cells, wrapped around the unit cells. Thereby, the electrode assembly according to the invention forms a stack-and-folding structure.

In one example, in an electrode assembly according to the present invention, the unit cells include A-type bicells and C-type bicells; a separator sheet of the unit cells includes an adhesive portion with a corona surface treatment and a non-adhesive portion without a corona surface treatment; and a plurality of A-type bicells and C-type bicells are disposed alternately up and down across the separator sheet.

In one embodiment, the unit cells include a positive electrode tab formed extending in a first direction of the positive electrode; and a negative electrode tab formed extending in a first direction of the negative electrode. Here, the direction in which the positive electrode tab is formed and the direction in which the negative electrode tab is formed may be the same, or may be opposite to each other. Further, the separator includes: a first adhesive portion with a corona surface treatment at an edge region where the positive electrode tab is located; and a second adhesive portion with a corona surface treatment at an edge region where the negative electrode tab is located.

In one embodiment, the surface of the separator is a structure in which the adhesive and non-adhesive portions are arranged alternately.

In another embodiment, the adhesive portion is formed on one or both sides of the separator.

In a specific example, the area in which the adhesive portion is formed is in the range of 10% to 70% of the area of the separator.

In another specific example, the adhesive portion forms a pattern. The pattern is at least one of a stripe-type pattern, a grid-type pattern, a dot-type pattern, and a polygon-type pattern.

Moreover, the present invention provides a secondary battery including the electrode assembly described above. For example, the secondary battery is a pouch-type secondary battery.

The present invention also provides a method of manufacturing an electrode assembly for a secondary battery. In one embodiment, the method of manufacturing an electrode assembly according to the present invention includes,
surface treatment by performing a corona discharge on one or both sides of the separator;
forming a unit cell including a positive electrode, a negative electrode, and a separator interposed between the positive and negative electrodes; and
disposing n unit cells, wherein n is an integer greater than or equal to 2, on a sheet-like separator sheet and winding the separator sheet in one direction.

Here, the separator embedded in the unit cell includes an adhesive portion with corona surface treatment and a non-adhesive portion without corona surface treatment. Further, the separator sheet is a structure without corona surface treatment.

In one embodiment, the surface treating is performed by electrifying the surface of the separator via a plasma generator.

In a specific example, in a corona discharge, the discharge range is in the range of 1.0 to 3.0 kV.

In another specific example, in a corona discharge, the discharge amount is in the range of 30 to 300 W-min/m².

### [Mode for Invention]

The present invention may have various modifications and various embodiments, and thus specific embodiments thereof will be described in detail below, being the scope defined by the appended claims.

However, it should be understood that the present invention is not limited to the specific embodiments, and includes all modifications, or alternatives within the technical scope of the appended set of claims.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance. In addition, in the present invention, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

In the present invention, an X-axis direction means a direction perpendicular to a direction in which an electrode tab (positive electrode or negative electrode) protrudes in an electrode assembly having a stacked structure, a Y-axis direction means a direction in which an electrode tab (positive electrode or negative electrode) protrudes, and a Z-axis direction means a direction perpendicular to the X-axis and Y-axis directions.

The present invention provides an electrode assembly, a lithium secondary battery including the electrode assembly, and a method of manufacturing the electrode assembly.

A conventional stacked or stack/folding electrode assembly includes a separator sheet, and a plurality of unit cells stacked through the separator sheet. The unit cells have alternating positive and negative electrodes stacked with separators interposed therebetween. If a separate adhesive layer is not formed on the separator located inside the unit cells of the folded electrode assembly, the separator-electrode interface is peeled off by various flows in the process, causing a problem of folding of the separator. Meanwhile, in order to improve the adhesion between the separator and the electrode interface, excessive dry adhesion is sometimes implemented in processes such as lamination or heat pressing on the entire surface of the separator, which can greatly increase the adhesion between the electrode and the separator of the unit cell, but the electrolyte impregnation and gas release properties are greatly reduced, and performance degradation factors of secondary battery such as Li plating may occur.

Accordingly, the present invention is an electrode assembly, which is a structure having a positive electrode, a negative electrode, and a plurality of unit cells having a separator interposed between the positive and negative electrodes wound into a sheet-like separator sheet, wherein the separator of the unit cells includes an adhesive portion with a corona surface treatment, wherein the adhesive portion forms an adhesive portion at the edge region where the electrode tabs are located to improve the adhesion of the edge region of the separator, and to allow a viscous solution to be impregnated between the non-adhesive portions where the adhesive portion is not formed to secure wetting.

Hereinafter, an electrode assembly according to the present invention and a method for manufacturing a lithium secondary battery and electrode assembly including the same will be described in detail.

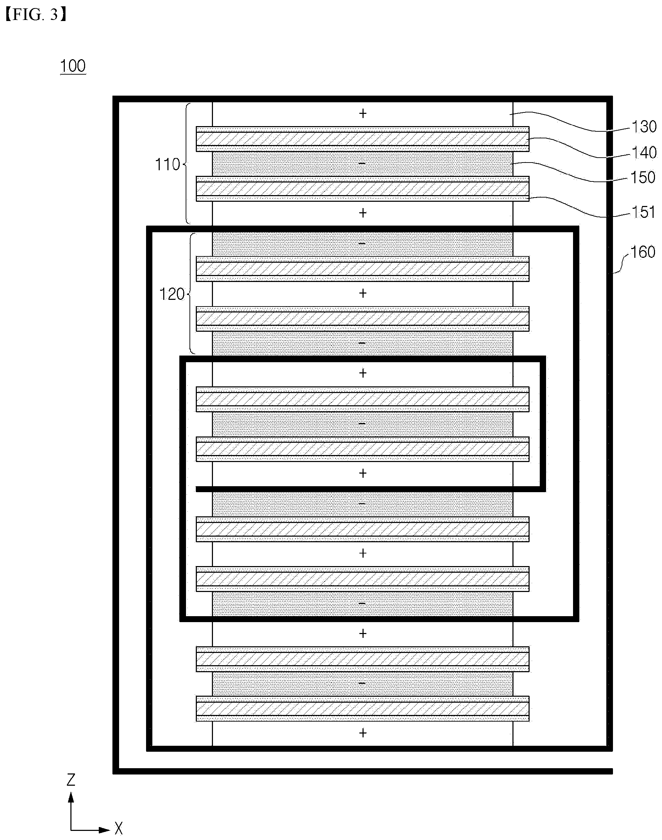

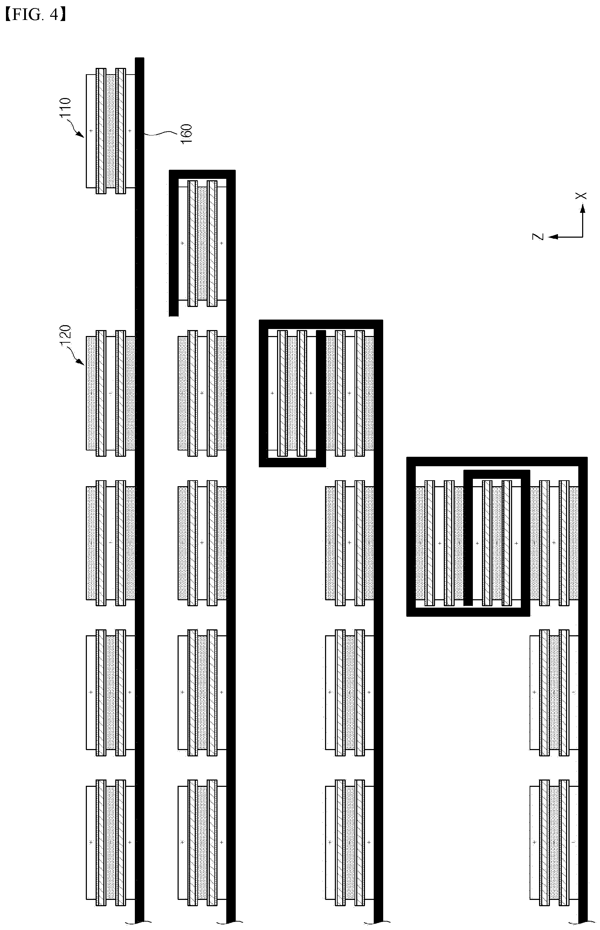

FIG. 3 is a front view of an electrode assembly according to one embodiment of the present invention, and FIG. 4 is a perspective view of an electrode assembly being manufactured by winding sequentially arranged unit cells on a separator sheet. Referring now to FIG. 3 and FIG. 4, an electrode assembly 100 of the present invention, wherein the electrode assembly 100 is a structure having a positive electrode 130, a negative electrode 140, and a plurality of unit cells with a separator 150 interposed between the positive electrode 130 and the negative electrode 140, the unit cells including a plurality of A-type bicells 110 and C-type bicells 120; a separator (150) of the unit cells, including an adhesive portion (151) with a corona surface treatment and a non-adhesive portion (152) without a corona surface treatment; wherein the plurality of A-type bicells (110) and C-type bicells (120) are disposed alternately up and down with the separator sheet (160) between them, but the separator sheet (160) is not corona surface treated.

Specifically, the electrode assembly 100 is a structure in which a plurality of unit cells are stacked, the unit cells including an A-type bicell 110 and a C-type bicell 120. The A-type bicell 110 has a structure in which a positive electrode 130, a separator 150, a negative electrode 140, a separator 150, and a positive electrode 130 are stacked sequentially, and the C-type bicell 120 has a structure in which a negative electrode 140, a separator 150, a positive electrode 130, a separator 150, and a negative electrode 140 are stacked sequentially. A unit cell with such a stacked structure is stacked with A-type bicell 110 and C-type bicell 120 face to face with separator sheet 160 interposed, resulting in a structure as shown in FIG. 3.

The electrode assembly 100 of the present invention is applicable to any structure in which unit cells are stacked, but can be in a stacked structure, a stack/folding structure, or a lamination/stack structure, as one example.

The separator 150 of the unit cell of the present invention may include an adhesive portion 151 with a corona surface treatment, which may improve the adhesion between the separator 150 and the electrodes. Further, the separator 150 of the unit cell of the present invention may include a non-adhesive portion 152 without corona surface treatment, which may be impregnated with electrolyte between the electrode facing upward and downward with the non-adhesive portion 152 without corona surface treatment, and the adhesive portion 151 and the non-adhesive portion 152 may form a pattern to prevent electrolyte or air bubbles from being trapped.

Meanwhile, the separator sheet 160 is not subjected to a corona surface treatment. The electrode assembly of the present invention is a structure in which the separator sheet 160 and the unit cell are stacked. The separator sheet 160, which faces upward and downward with the positive electrode 130 or the negative electrode 140 of the unit cell, is relatively less likely to fold than the separator 150 inside the unit cell due to a decrease in adhesion. On the other hand, in some cases, electrolyte impregnation between the separator sheet 160 and the electrode can be problematic. Therefore, rather than applying a corona surface treatment to the separation sheet 160 to improve the adhesion of the unit cell to the electrode, the separation sheet 160 is not subjected to a corona surface treatment to improve the electrolyte impregnability.

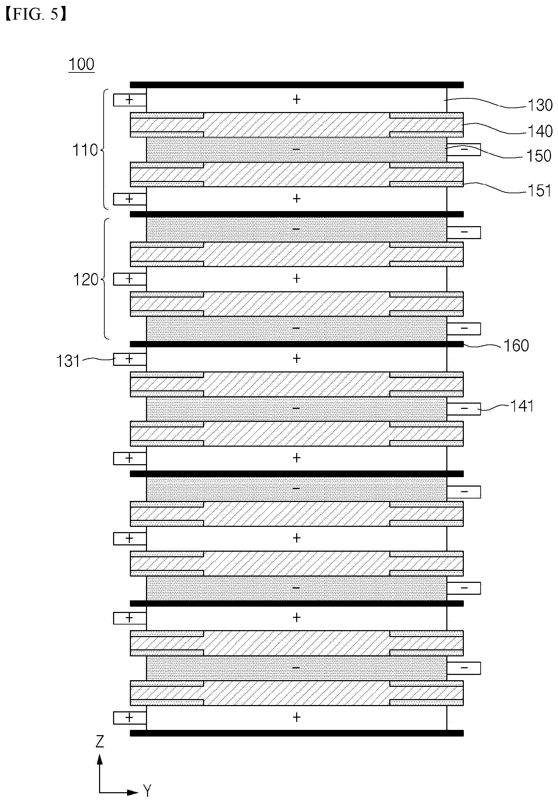

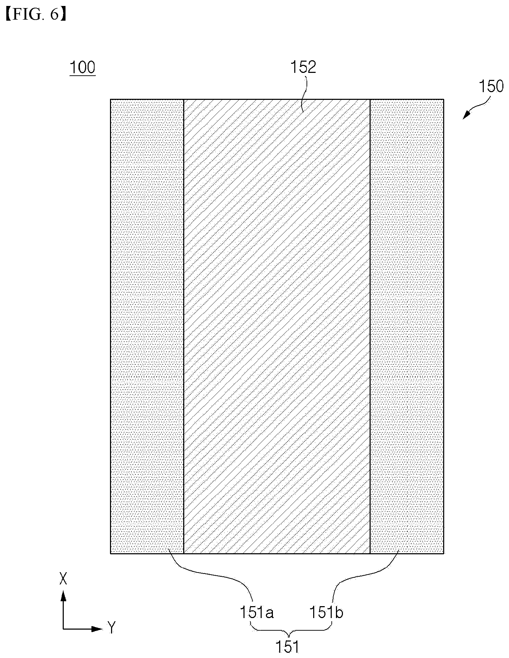

FIG. 5 is a schematic diagram illustrating a side view of an electrode assembly according to one embodiment of the present invention, and FIG. 6 is a schematic diagram illustrating an adhesion pattern of a separator located inside a unit cell according to one embodiment of the present invention. Referring to FIG. 5 and FIG. 6, the unit cells of the present invention include a positive tab 131 extending in one direction of the positive electrode 130 and a negative tab 141 extending in one direction of the negative electrode 140. The separator 150 of the present invention includes a first adhesive portion 151a formed by corona surface treatment on an edge region where the positive electrode tab 131 is located, and a second adhesive portion 151b formed by corona surface treatment on an edge region where the negative electrode tab 141 is located. In the electrode assembly 100 in a stacked form as in the present invention, the region where the interfacial adhesion between the separator 150 of the unit cell and the electrodes is weak is the edge region of the separator 150 located in the direction in which the electrode tabs protrude. In the process of electrode assembly, there is a problem that the electrode tabs may be bent to form a gap between the separator 150 and the electrode, and that the gap causes the separator 150 to fold. Therefore, the present invention is characterized by including an adhesive portion 151 with corona surface treatment on the separator 150 of the unit cell, but with corona surface treatment on the edge region where the electrode tabs are located.

Specifically, the separator 150 can solve the problem of folding of the separator 150 of the unit cell by increasing the adhesion of the edge regions where the positive electrode tabs 131 are located by including a first adhesive portion 151a with corona surface treatment on the edge region where the positive electrode tabs 131 are located and a second adhesive portion 151b formed by corona surface treatment on the edge region where the negative electrode tabs 141 are located. Furthermore, the region between the first adhesive portion 151a and the second adhesive portion 151b is provided with a non-adhesive portion 152 that is not corona patterned, so that electrolyte flow to the non-adhesive portion 152 can be smooth, thereby improving electrolyte impregnation.

In a specific example, the adhesive portion 151 of the present invention may be formed on one or both sides of the separator 150. While FIG. 3 to FIG. 5 illustrate the adhesive portion 151 being formed on both sides of the separator 150, it is obvious that the adhesive portion 151 may be formed on only one side of the separator 150. However, if the adhesive portion 151 is formed only on a single side of the separator 150, the electrolyte impregnability may be increased, but the adhesion between the other side of the separator 150 and the electrode tabs where the adhesive portion 151 is not formed may be decreased, so it is preferable to form the adhesive portion 151 on both sides of the separator 150.

Furthermore, the separators 150 of the unit cells of the present invention may have the same shape of the coating portion. When assembled in this manner, since the separator 150 used within one unit cell is identical, the process time for manufacturing the electrode assembly 100 may be relatively shortened, thereby improving productivity.

Meanwhile, the adhesive portion 151 may be in the range of 10% to 70% of the total area of the separator 150, preferably in the range of 20% to 60%, and more preferably in the range of 30% to 50%. If the adhesive portion 151 is less than 10% of the total area of the separator 150, the area required for adhesion to the electrode may be insufficient to ensure sufficient adhesion. Furthermore, if the adhesive portion 151 is greater than 70% of the total area, the non-adhesive portion 152 may have a smaller area, resulting in less flow of electrolyte, which may result in more frequent trapping.

Further, the adhesive portion 151 forms a regular pattern on the separator 150, wherein the pattern may be formed in one or more of a stripe-type pattern, a grid-type pattern, a dot-type pattern, and a polygon-type pattern. Preferably, the contact assembly is formed in a stripe pattern for improved productivity and internal flow of the electrolyte.

Further, the number of repetitions of the pattern within the separator 150 is preferably from one to four. If the number of repetitions of the pattern exceeds four, the pattern of the coated portions within the separator 150 becomes overly detailed, and the productivity of the electrode assembly 100 is reduced.

Meanwhile, the separator 150 of the present invention can be used without any particular restriction if it is to be used as a separator in a lithium secondary battery, and it is particularly desirable that it has a low resistance to ion migration of the electrolyte and an excellent ability to moisten the electrolyte. Specifically, a porous polymeric film, for example, a porous polymeric film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof, may be used. In addition, conventional porous nonwoven fabrics may be used, for example, nonwoven fabrics made of high melting point glass fibers, polyethylene terephthalate fibers, and the like. In addition to the above-described materials, it is also possible to manufacture the separator 150 using polymers with high heat resistance. Furthermore, the separator 150 of the present invention may be a composite porous Safety-Reinforcing Separators (SRS) separator. In a specific example, the SRS separator may be manufactured using inorganic particles and a binder polymer as an active layer component on a polyolefin-based or polyester-based separator substrate. Further, the separator 150 may be a porous thin film having a pore diameter of 0.01 to 10 µm and a thickness of 5 to 300 µm.

Meanwhile, the separator sheet 160 of the invention may also include one or more mixtures selected from any of the foregoing materials.

In addition, the corona surface treatment source can be air, oxygen (O2) or nitrogen (N2). In corona surface treatment, a significant improvement in wettability is achieved by the synergistic effect of the physical surface modification of the electrical discharge itself and the chemical surface modification by the generation of functional groups. Such chemical surface modification occurs when high-energy electrons or ions collide to generate radicals or ions on the separator 150 substrate, and the surrounding air, oxygen, nitrogen, ozone, moisture, etc. react with them, introducing polar functional groups such as carbonyl groups, carboxyl groups, hydroxyl groups, cyano groups, etc. to cause chemical surface modification.

Additionally, the corona surface treatment source may utilize a plasma with polymers to perform corona treatment, i.e., when particles with high energy that are in a plasma state collide with the surface of the separator 150 substrate, the energy is transferred to the surface of the colliding separator 150, and the separator 150 may be chemically or physically activated to improve adhesion between layers of the polymer mixture.

Meanwhile, the binder polymer mixture may be one including a porous inorganic filler and a binder polymer. By adding the inorganic filler to the binder polymer mixture, the mechanical strength of the separator 150 can be increased, thereby ensuring the safety of the battery by external forces or the like. Such a separator 150 may simultaneously improve the electrochemical safety and performance of the battery by connecting and fixing the inorganic fillers due to the binder polymer and forming a heat-resistant pore structure due to the interstitial volume between the inorganic fillers.

The concentration of the inorganic filler may be from 60 to 90 wt%, preferably from 70 to 80 wt%, based on the weight of the polymer mixture layer. If the concentration of the inorganic filler is too low, the desired degree of mechanical strength cannot be maintained, and conversely, if the concentration of the inorganic filler is too high, the porosity of the separator 150 cannot be ensured due to the excess of inorganic components, which can lead to a decrease in ionic conductivity and thus an increase in internal resistance.

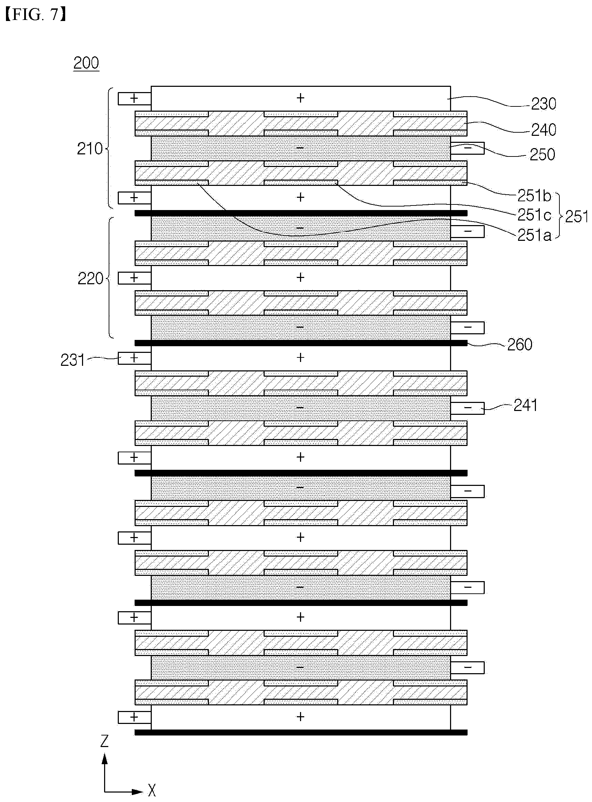

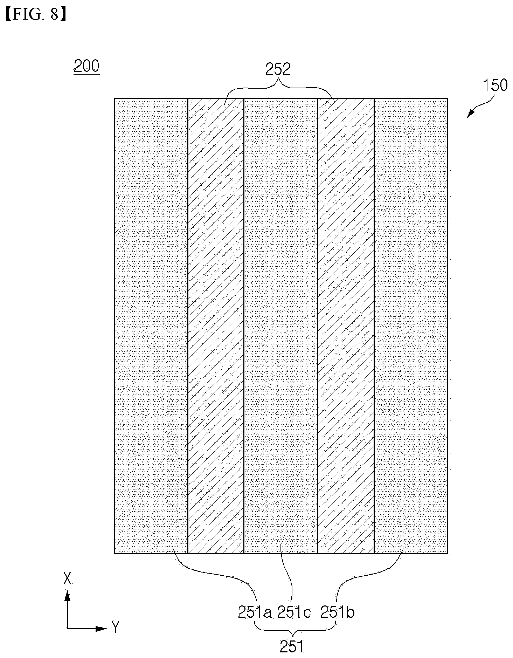

FIG. 7 is a perspective view illustrating a side view of an electrode assembly according to another embodiment of the present invention, and FIG. 8 is a perspective view illustrating an adhesion pattern of a separator located inside a unit cell according to another embodiment of the present invention. Referring to FIG. 7 and FIG. 8, the electrode assembly 200 of the present invention is a structure in which unit cells are stacked with a separator sheet 260 between them. Here, the unit cell includes an A-type bicell 210 stacked in the order of positive electrode 230/separator 250/negative electrode 240/separator 250/positive electrode 230, and a C-type bicell 220 stacked in the order of negative electrode 240/separator 250/positive electrode 230/separator 250/negative electrode 240.

The separator 250 of the present invention has a structure in which the adhesive portion 251 and the non-adhesive portion 252 are arranged alternately with each other, but includes a third adhesive portion located between the first adhesive portion 251a and the second adhesive portion 251b, wherein the third adhesive portion may be n (n is an integer greater than or equal to 1). In other words, the separator 250 may include a third adhesive portion 251c between the first adhesive portion 251a formed by corona surface treatment on the edge region where the positive electrode tab 231 is located and the second adhesive portion 251b formed by corona surface treatment on the edge region where the negative electrode tab 241 is located, where the third adhesive portion 251c may be one or more. FIG. 7 illustrates, but is not limited to, an electrode assembly 200 having one third adhesive portion 251c formed between the first and second adhesive portions 251a, 251b. By further forming the third adhesive portion 251c on the surface of the separator 250 in this manner, the interfacial adhesion between the separator 250 and the electrode in the center region as well as the edge region of the separator 250 can be increased. However, if the area of the third adhesive portion 251c is excessively large, or if the number of the third adhesive portions 251c is large, the electrolyte impregnability may be deteriorated, so it is desirable to form the third adhesive portion 251c appropriately according to the purpose.

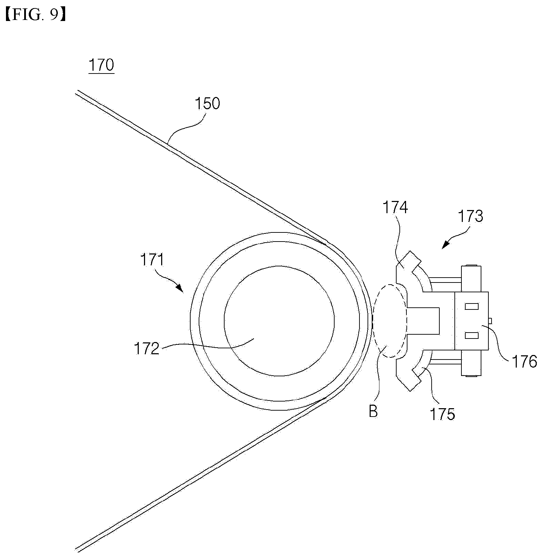

FIG. 9 is a schematic diagram illustrating a plasma generator that corona treatment of a surface of a separator according to one embodiment of the present invention. Referring to FIG. 9, the separator 150 being corona surface treated by the plasma generator 170 is a separator 150 to be inserted inside a unit cell, and while FIG. 9 illustrates corona surface treatment on one side of the separator 150, it is not limited thereto, and both sides of the separator 150 may be corona surface treated.

In a specific example of the invention, the corona surface treatment uses a plasma generator 170 to electrify the surface of the separator 150. In one example, the apparatus for corona treating the surface of the separator 150 may include a roller portion 171 including a metal member 172 and a plasma generating portion 173 disposed spaced apart from the roller portion 171 and which generates plasma by interacting with the metal member 172 to irradiate the surface of the separator 150. The plasma generating portion 173 is spaced apart from the separator 150 and generates plasma by interacting with the metal member 172 to irradiate the surface of the separator 150. One type of plasma generated may be a plasma resulting from a corona discharge. Specifically, the plasma generating portion 173 includes a main body 174 disposed spaced apart from the roller portion 171, an electrode member 175 that is coupled to the main body 174 and generates plasma on a surface of the separator 150 in a position facing the metal member 172 to form an adhesive layer on the surface of the separator 150, and a guide member 176 that fixes the electrode member 175 and the main body 174 or moves the position of the electrode member 175 to a direction perpendicular to the conveying direction of the separator 150 (TD direction).

The main body 174 is elongated in a direction perpendicular to the conveying direction of the separator 150 (TD direction), and may have a length corresponding to or greater than a width length of the separator 150. The main body 174 may be constructed of a non-metallic material.

The electrode members 175 are disposed on an outer surface of the main body 174 corresponding to the conveying direction (MD direction) of the separator 150, and may have a structure having a plurality of electrode members arranged side by side in a direction perpendicular to the conveying direction (TD direction) of the separator 150. The electrode member 175 may be provided with at least a pair of electrode members 175 for applying corona surface treatment to the edges located on both sides of the conveying direction (MD) of the separator 150, and may be provided with additional electrode members 175 for applying corona surface treatment to areas other than the edges located on said two sides, as needed. In this way, by having a plurality of electrode members, an adhesive layer is formed only on the surface of the separator 150 located between the electrode member 175 and the metal member 172, and since no plasma is generated on the surface of the separator 150 without the electrode member 175, a non-adhesive layer is formed to form a patterned adhesive layer in the form of a stripe.

The electrode member 175 may be a corona discharge electrode, as a specific example. The corona discharge electrode may stably generate a plasma in interaction with the metal member 172 to provide a corona surface treatment on the surface of the separator 150.

The guide member 176 can fix the plurality of electrode members 175 to the main body 174, and can move each of the plurality of electrode members 175 in a direction perpendicular to the conveyance direction of the separator 150 (TD direction). In a specific example, the guide member 176 may include a guide groove (not shown) elongated in a direction perpendicular to the conveying direction (TD direction) of the separator 150 and a fixing member (not shown) to which the electrode members 175 are engaged and secured in the guide groove. The electrode members 175 are removable in the guide groove and slidably move along the guide groove and can be repositioned. Since the electrode members 175 are removable in the guide groove, the number of electrode members 175 can be adjusted, and since the electrode members 175 can be slidably moved along the guide groove, the position of the electrode members 175 can be adjusted according to the use, thereby adjusting the position of the adhesive layer formed on the surface of the separator 150 and adjusting the pattern width.

Meanwhile, the guide member 176 may include an indicating member (not shown) with a scale on its surface in a direction perpendicular to the feed direction of the separator 150 (TD direction). The indicating member enables the position of the electrode member 175 to be accurately confirmed, thereby increasing the precision of the corona surface treatment.

In a specific example of the present invention, the discharge range for corona surface treatment may be in the range of 1.0 to 3.0 kV, and preferably in the range of 1.5 to 2.5 kV. When the discharge range is less than 1.0 kV, it is difficult to perform uniform corona surface treatment on the surface of the separator, and when it exceeds 3.0 kV, it may not be easy to operate the corona generating apparatus in performing corona treatment in a fine pattern, so it is preferable to discharge within the above range.

Furthermore, in the corona surface treatment, the discharge amount may be in the range of 30 to 300 W-min/m2, and preferably in the range of 100 to 200 W-min/m2. In a case where the discharge amount is less than 30 W-min/m2, it may be difficult to achieve the desired effect due to difficulty in performing a detailed surface treatment on the surface of the separator, and in a case where the discharge amount is greater than 300 W-min/m2, it may change the properties of the separator, so it is preferable to discharge within the above range.

Further, the present invention provides a lithium secondary battery including an electrode assembly as described above. In a specific example, an electrode assembly included in a lithium secondary battery of the present invention is an electrode assembly having a positive electrode, a negative electrode, and a plurality of unit cells wound into a sheet-like separator sheet, the unit cells including A-type bicells and C-type bicells, the separator of the unit cells, including an adhesive portion with a corona surface treatment and a non-adhesive portion without a corona surface treatment, and wherein the plurality of type A bicells and type C bicells are arranged alternately up and down with the separator sheet spaced therebetween, the electrode assembly characterized in that the separator sheet does not have a corona surface treatment.

The lithium secondary battery of the present invention is a structure in which an electrode assembly is sealed inside a battery case together with an electrolyte solution. The type of the secondary battery is not particularly limited, but as a specific example, it may be a lithium secondary battery, such as a lithium ion (Li-ion) secondary battery, a lithium polymer (Li-polymer) secondary battery, or a lithium ion polymer (Li-ion polymer) secondary battery, etc. having the advantages of high energy density, discharge voltage, output stability, etc.

In the lithium secondary battery of the present invention, the electrode may be a structure in which an electrode active material layer is formed by applying an electrode forming slurry that includes an electrode active material on the electrode collector. The electrode slurry may be applied to at least one side of the current collector.

Here, the current collector may be a positive electrode current collector or a negative electrode current collector, and said electrode active material may be a positive active material or a negative active material. Further, said electrode slurry may further include a conductive material and a binder in addition to the electrode active material.

In the present invention, the positive electrode current collector is generally made with a thickness of 3 to 500 µm. Such a positive electrode current collector is not particularly limited as long as it has a high conductivity without causing chemical changes in the cell in use, and, for example, stainless steel, aluminum, nickel, titanium, calcined carbon, or a surface of aluminum or stainless steel surface treated with carbon, nickel, titanium, silver, etc. may be used. The current collector may also have microscopic irregularities formed on its surface to increase the adhesion of the positive electrode active material, and may be in the form of a film, sheet, foil, net, porous body, foam, nonwoven body, etc.

In the case of the sheet for the negative electrode current collector, it is typically made with a thickness of 3 to 500 µm. Such a negative electrode current collector is not particularly limited as long as it has conductivity without causing chemical changes in the cell in use, and for example, copper, stainless steel, aluminum, nickel, titanium, calcined carbon, a surface of copper or stainless steel treated with carbon, nickel, titanium, silver, etc., an aluminum-cadmium alloy, and the like may be used. Also, as with the positive electrode current collector, fine irregularities may be formed on the surface to strengthen the binding force of the negative electrode active material, and may be used in various forms such as a film, a sheet, a foil, a net, a porous body, a foam, a nonwoven body, and the like.

The present invention, a positive electrode active material is a material capable of producing an electrochemical reaction, such as a lithium transition metal oxide, including two or more transition metals, and a layered compound such as, for example, lithium cobalt oxide (LiCoO2), lithium nickel oxide (LiNiO2) substituted with one or more transition metals, etc; lithium manganese oxide substituted with 1 or more transition metals; lithium nickel-based oxide represented by the formula LiNi1-yMyO2 (wherein M = Co, Mn, Al, Cu, Fe, Mg, B, Cr, Zn, or Ga and including one or more of the above elements, 0.01 ≤y≤0.7), etc; lithium nickel cobalt manganese complex oxide, represented by Li1+zNibMncCo1-(b+c+d)MdO(2-e)Ae, such as Li1+zNi1/3Co1/3Mn1/3O2, Li1+zNi0.4Mn0.4Co0.2O2 (wherein -0.5≤z≤0.5, 0.1≤b≤0.8, 0.1≤c≤0.8, 0≤d≤0.2, 0≤e≤0.2, b+c+d<1, M = Al, Mg, Cr, Ti, Si, or Y, and A = F, P, or Cl), etc; olivine-based lithium metal phosphates represented by the formula Li1+xM1-yM'yPO4-zXz, wherein M = transition metal, preferably Fe, Mn, Co, or Ni, M' = Al, Mg, or Ti, X = F, S, or N, and -0.5≤x≤+0.5, 0≤y≤0.5, 0≤z≤0.1, are examples, but are not limited to.

The negative electrode active material may be, for example, carbon, such as anthracite, graphitized carbon, etc.; LixFe2O3 (0≤x≤1), LixWO2 (0≤x≤1), SnxMe1-xMe'yOz (Me: Mn, Fe, Pb, Ge; Me': Al, B, P, Si; 1, 2, 3 elements of the periodic table; halogens; 0<x≤1; 1≤y≤3; 1≤z≤8) and the like metal complex oxides; lithium metals; lithium alloys; silicon-based alloys; tin-based alloys; SnO, SnO2, PbO, PbO2, Pb2O3, Pb3O4, Sb2O3, Sb2O4, Sb2O5, GeO, GeO2, Bi2O3, Bi2O4, Bi2O5, and the like metal oxides; conductive polymers such as polyacetylene; Li-Co-Ni based materials; and the like.

The conductive material is typically added in an amount of 1 to 30 wt%, based on the total weight of the mixture including the positive electrode active material. Such conductive materials are not particularly limited as long as they are conductive without causing chemical changes in the cell in use, for example, graphite, such as natural graphite or artificial graphite; carbon black, such as carbon black, acetylene black, ketchen black, channel black, furnace black, lamp black, summer black, etc; conductive fibers, such as carbon fibers or metal fibers; metal powders, such as carbon fluoride, aluminum, nickel powder; conductive whiskers, such as zinc oxide, potassium titanate; conductive metal oxides, such as titanium oxide; and conductive materials, such as polyphenylene derivatives, etc.

The binder is a component that aids in the binding of the active material to the conductive material and the like to the current collector, and is typically added at 1 to 30 wt% based on the total weight of the mixture including the positive electrode active material. Examples of such binders include polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrene-butylene rubber, fluorinated rubber, and various copolymers, and the like.

Meanwhile, such an electrode slurry may be prepared by dissolving the electrode active material, the conductive material and the binder, etc. in a solvent. There is no particular limitation on the type of the solvent as long as it is capable of dispersing the electrode active material or the like, and both an aqueous solvent or a non-aqueous solvent can be used. For example, the solvent may be a solvent commonly used in the art, and may be dimethyl sulfoxide (DMSO), isopropyl alcohol, N-methylpyrrolidone (NMP), acetone, or water, or the like, and one of these alone or a mixture of two or more of these may be used. The amount of the solvent used may be such that the slurry has a suitable viscosity, taking into account the application thickness, manufacturing yield, workability, etc. of the slurry, and is not particularly limited.

Meanwhile, in the lithium secondary battery, the electrolyte may include, but is not limited to, organic solvents and lithium salts conventionally used in electrolytes.

Organic solvents can be used without any special restrictions as long as they can act as a medium through which the ions involved in the electrochemical reactions in the cell can move. Specifically, the organic solvents include ester-based solvents such as methyl acetate, ethyl acetate, γ-butyrolactone, ε-caprolactone, and the like; ether-based solvents, such as dibutyl ether or tetrahydrofuran; ketone-based solvents, such as cyclohexanone; Aromatic hydrocarbon solvents, such as benzene and fluorobenzene; carbonate solvents such as dimethylcarbonate (DMC), diethylcarbonate (DEC), methylethylcarbonate (MEC), ethylmethylcarbonate (EMC), ethylene carbonate (EC), propylene carbonate (PC), and others.

Among them, carbonate-based solvents are preferred, and mixtures of annular carbonates (e.g., ethylene carbonate or propylene carbonate), which have high ionic conductivity and high dielectric constant that can improve the charge and discharge performance of the battery, and linear carbonate-based compounds (e.g., ethylmethylcarbonate, dimethylcarbonate, or diethylcarbonate) with low viscosity are more preferred.

The lithium salt may be any compound capable of providing lithium ions for use in a lithium secondary battery, without limitation. Specifically, the lithium salt may be LiPF6, LiClO4, LiAsF6, LiBF4, LiSbF6, LiAl04, LiAlCl4, LiCF3SO3, LiC4F9SO3, LiN(C2F5SO3)2, LiN(C2F5SO2)2, LiN(CF3SO2)2. LiCl, LiI, or LiB(C2O4)2 and the like may be used. Preferably, the lithium salt is included in the electrolyte at a concentration of about 0.6 mol% to 2 mol%.

In addition to the above components of the electrolyte, the electrolyte may contain, for example, pyridine, triethylphosphite, triethanolamine, cyclic ether, ethylenediamine, N-glyme, Hexanoic acid triamide, nitrobenzene derivatives, sulfur, quinone imine dyes, N-substituted oxazolidinones, N,N-substituted imidazolidines, ethylene glycol dialkyl ethers, ammonium salts, pyrroles, 2-methoxyethanol, or aluminum trichloride, and the like may be included as one or more additives, for the purpose of improving the life characteristics of the cell, inhibiting the reduction of the cell capacity, improving the discharge capacity of the cell, etc. In this case, the additive may be included in an amount of 0.1 to 5 wt% based on the total weight of the electrolyte.

The lithium secondary battery of the present invention can be manufactured by placing a separator between a positive electrode and a negative electrode to form an electrode assembly, the electrode assembly being placed in a cylindrical cell case or a prismatic cell case and then injected with an electrolyte. Alternatively, the electrode assembly may be manufactured by stacking the electrode assembly, impregnating it with an electrolyte, and then placing the resulting product into a cell case and sealing it.

In manufacturing the lithium secondary battery of the present invention, the electrode assembly may be dried to remove one or more organic solvents selected from the group consisting of N-methyl-2-pyrrolidone (NMP), acetone, ethanol, propylene carbonate, ethylmethylcarbonate, ethylene carbonate, and dimethylcarbonate that were used in manufacturing the positive electrode. If, as the electrolyte, an electrolyte of the same composition as the organic solvent used in the preparation of the positive electrode is used, the process of drying the electrode assembly may be omitted.

In contrast to the lithium secondary battery described above, the lithium secondary battery according to other embodiments of the present invention may be a solid-state battery.

The battery case may be any conventionally used in the art and is not limited in shape depending on the intended use of the battery, for example, it may be cylindrical, angular, pouch-shaped, or coin-shaped, such as a can.

The lithium secondary battery according to the present invention exhibits excellent discharge capacity, output characteristics, and capacity retention rate stably, and is therefore useful in portable devices such as cell phones, notebook computers, and digital cameras, and in the field of electric vehicles such as energy storage systems (ESS) and hybrid electric vehicles (HEV).

The present invention also provides a method for manufacturing an electrode assembly. The foregoing description of the electrode assembly may be redundant of the specific description of the electrode assembly, which is hereby incorporated by reference in its entirety.

In one example, a method for manufacturing an electrode assembly according to the present invention, the method including: manufacturing an electrode assembly having a structure in which a positive electrode, a negative electrode, and a plurality of unit cells having a separator interposed between the positive electrode and the negative electrode are wound into a sheet-like separation sheet; performing a corona surface treatment on one or both sides of the separator substrate; stacking the positive electrode sheet and the negative electrode sheet with the corona discharge-treated separator interposed thereon, and cutting them to a predetermined size to manufacture a unit cell including an A-type bicell and a C-type bicell; and manufacturing an electrode assembly having a structure in which a plurality of unit cells are positioned on a sheet-like separator sheet and the separator sheet is wound in one direction so that the A-type bicells and the C-type bicells are arranged alternately up and down with the separator between them; wherein the separator sheet of the unit cells includes an adhesive portion with a corona surface treatment and an unadhesive portion without a corona surface treatment, and the separator sheet is not corona surface treated.

In the surface treatment by performing corona discharge on one or both sides of the separator, the separator substrate is transported by a roller portion including a metal member, and a plasma generating portion disposed spaced apart from the roller portion generates plasma on the surface of the separator substrate by mutual reaction with the metal member to form an adhesive layer. In a specific example, the plasma generating unit includes an electrode member and generates plasma by interaction of the electrode member and the metal member. Here, the electrode member can be made of a corona discharge electrode. Since an adhesive layer is formed only on the surface of the separator located between the electrode member and the metal member, and no plasma is generated on the surface of the separator without the electrode member, a non-adhesive layer may be formed to form a stripe-like patterned adhesive layer.

The manufacturing of a unit cell including the A-type bicell and the C-type bicell, wherein each of the positive electrode substrate, the negative electrode substrate, and the separator substrate with corona surface treatment transported by the roller is cut and stacked to conform to the A-type bicell structure (a structure in which the positive electrode, separator, negative electrode, separator, and positive electrode are stacked sequentially) or a C-type bicell structure (a structure in which a negative electrode, a separator, a positive electrode, a separator, and a negative electrode are stacked sequentially), and thermally fused using a laminator or a heat press to produce a unit cell such as an A-type bicell or a C-type bicell.

The manufacturing of the electrode assembly, wherein the plurality of unit cells is positioned on a sheet-like separator sheet and the separator sheet is wound in one direction to manufacture an electrode assembly having a structure in which A-type bicells and C-type bicells are arranged alternately up and down across the separator sheet. An electrode assembly can be manufactured by placing an A-type bicell at the starting point of the winding, sequentially arranging them in a repeating pattern such as C-type bicell, C-type bicell, A-type bicell, A-type bicell, C-type bicell, C-type bicell, and then winding to produce an electrode assembly with an A-type bicell at the center. Alternatively, a C-type bicell can be placed at the start of the winding, sequentially arranged to have a repeating pattern of A-type bicell, A-type bicell, C-type bicell, C-type bicell, A-type bicell, A-type bicell, and then wound to produce an electrode assembly with a C-type bicell at the center.

Meanwhile, the separator sheet is not subjected to a corona surface treatment. Since the separation sheet is stacked with the unit cell and the probability of folding of the separation sheet by the flow is lower than the probability of folding of the separator inside the unit cell, the separation sheet is not subjected to corona surface treatment in order to improve the electrolyte impregnation rather than to increase the interfacial adhesion between the separation sheet and the electrode sheet of the unit cell.

In another example, in a method of manufacturing an electrode assembly according to the present invention, the unit cells include a positive electrode tab extending in a first direction of the positive electrode and a negative electrode tab extending in a second direction of the negative electrode, and the separator includes a first adhesive portion formed by corona surface treatment on an edge region where the positive electrode tab is located and a second adhesive portion formed by corona surface treatment on an edge region where the negative electrode tab is located.

In the surface treatment of performing a corona discharge on one or both sides of the separator substrate, the edges of the two side portions in the direction in which the separator is transported (MD direction) correspond to positions that face the electrode tabs inside the unit cell to be manufactured in the future. Therefore, in the corona surface treatment of the separator substrate, the edges of the two side portions in the direction in which the separator is transported (MD direction) can be corona surface treated to improve the adhesive portion of the edge of the separator that faces the electrode tabs of the unit cell to be manufactured in the future.

In another example, in a method of manufacturing an electrode assembly according to the present invention, the separator may be an electrode assembly having a structure in which adhesive and non-adhesive portions are arranged alternately with each other, including a third adhesive portion located between the first adhesive portion and the second adhesive portion, wherein the third adhesive portion includes n pieces (n is an integer greater than or equal to 1). One or more third adhesive portions may be formed between the first adhesive portion and the second adhesive portion to improve the adhesion between the separator and the electrodes. The number of the third adhesive portions is not particularly limited, but can be set to be suitable for the purpose in consideration of the impregnability of the electrolyte.

### [Description of Reference Numerals]

1, 100, 200: electrode assembly
10, 110, 210: A-type bicell
20, 120, 220: C-type bicell
30, 130, 230: positive electrode
40, 140, 240: negative electrode
50, 150, 250: separator
60, 160, 260: separator sheet
131, 231: positive electrode tab
141, 241: negative electrode tab
151, 251: adhesive portion
151a, 251a: first adhesive portion
151b, 251b: second adhesive portion
152, 252: non-adhesive portion
170: plasma generator
171: roller portion
172: metal member
173: plasma generating portion
174: main body
175: electrode member
176: guide member
251c: third adhesive portion

## Claims

1. An electrode assembly (100, 200) comprising: a stack structure having n stacked unit cells including a positive electrode (130, 230), a negative electrode (140, 240), and a separator (150, 250) interposed between the positive (130, 230) and negative (140, 240) electrodes, wherein n is an integer greater than or equal to 2, and a separator sheet (160, 260) is disposed between the unit cells,
the separator (150, 250) embedded within a unit cell, including an adhesive portion (151, 251) with a corona surface treatment and a non-adhesive portion (152, 252) without a corona surface treatment,
wherein the separator sheet (160, 260) is a structure without a corona surface treatment.

2. The electrode assembly (100, 200) of claim 1, wherein the separator sheet (160, 260) is a structure wound between the stacked unit cells, wrapped around the unit cells.

3. The electrode assembly (100, 200) of claim 1, wherein the unit cells comprising:
a positive electrode tab (131, 231) formed extending in a first direction of the positive electrode (130, 230); and
a negative electrode tab (141, 241) formed extending in a first direction of the negative electrode (140, 240); and
wherein the separator (150, 250) comprising:
a first adhesive portion (151a, 251a) with a corona surface treatment at an edge region where the positive electrode tab (131, 231) is located; and
a second adhesive portion (151b, 251b) with a corona surface treatment at an edge region where the negative electrode tab (141, 241) is located

4. The electrode assembly (100, 200) of claim 1, wherein the surface of the separator (150, 250) is a structure in which the adhesive (151, 251) and non-adhesive (152, 252) portions are arranged alternately.

5. The electrode assembly (100, 200) of claim 1, wherein the adhesive portion (151, 251) is formed on one or both sides of the separator (150, 250).

6. The electrode assembly (100, 200) of claim 1, wherein an area in which the adhesive portion (151, 251) is formed is in the range of 10% to 70% of an area of the separator (150, 250).

7. The electrode assembly (100, 200) of claim 1, wherein the adhesive portion (151, 251) forms a pattern, and
the pattern is at least one of a stripe-type pattern, a grid-type pattern, a dot-type pattern, and a polygon-type pattern.

8. A secondary battery comprises the electrode assembly (100, 200) of claim 1.

9. The secondary battery of claim 8, wherein the secondary battery is a pouch-type secondary battery.

10. A method of manufacturing an electrode assembly (100, 200) for a secondary battery comprising:
surface treatment by performing a corona discharge on one or both sides of the separator (150, 250);
forming a unit cell including a positive electrode (130, 230), a negative electrode (140, 240), and a separator (150, 250) interposed between the positive (130, 230) and negative (140, 240) electrodes; and
disposing n unit cells, wherein n is an integer greater than or equal to 2, on a sheet-like separator sheet (160, 260) and winding the separator sheet (160, 260) in one direction,
wherein the separator (150, 250) embedded in the unit cell comprises an adhesive portion (151, 251) with corona surface treatment and a non-adhesive portion (152, 252) without corona surface treatment,
the separator sheet (160, 260) is a structure without corona surface treatment.

11. The method of manufacturing an electrode assembly (100, 200) for a secondary battery of claim 10, wherein the surface treating is performed by electrifying the surface of the separator (150, 250) via a plasma generator (170).

12. The method of manufacturing an electrode assembly (100, 200) for a secondary battery of claim 10, wherein in a corona discharge, the discharge range is in the range of 1.0 to 3.0 kV.

13. The method of manufacturing an electrode assembly (100, 200) for a secondary battery of claim 10, wherein in a corona discharge, the discharge amount is in the range of 30 to 300 W-min/m².

## Patentansprüche

1. Elektrodenanordnung (100, 200), umfassend: eine Stapelstruktur mit n gestapelten Einheitszellen, die eine positive Elektrode (130, 230), eine negative Elektrode (140, 240) und einen Separator (150, 250) umfassen, der zwischen der positiven (130, 230) und der negativen (140, 240) Elektrode angeordnet ist, wobei n eine ganze Zahl größer oder gleich 2 ist und eine Separatorfolie (160, 260) zwischen den Einheitszellen angeordnet ist,
wobei der in eine Einheitszelle eingebettete Separator (150, 250) einen adhäsiven Abschnitt (151, 251) mit Corona-Oberflächenbehandlung und einen nicht-adhäsiven Abschnitt (152, 252) ohne Corona-Oberflächenbehandlung umfasst,
wobei es sich bei der Separatorfolie (160, 260) um ein Gefüge ohne Corona-Oberflächenbehandlung handelt.

2. Elektrodenanordnung (100, 200) nach Anspruch 1, wobei es sich bei der Separatorfolie (160, 260) um ein Gefüge handelt, das zwischen den gestapelten Einheitszellen hindurchgewickelt und um die Einheitszellen herumgewickelt ist.

3. Elektrodenanordnung (100, 200) nach Anspruch 1, wobei die Einheitszellen umfassen:
eine positive Elektrodenfahne (131, 231), die so ausgebildet ist, dass sie sich in einer ersten Richtung der positiven Elektrode (130, 230) erstreckt; und
eine negative Elektrodenfahne (141, 241), die so ausgebildet ist, dass sie sich in einer ersten Richtung der negativen Elektrode (140, 240) erstreckt; und
wobei der Separator (150, 250) umfasst:
einen ersten adhäsiven Abschnitt (151a, 251a) mit Corona-Oberflächenbehandlung an einem Randbereich, an dem sich die positive Elektrodenfahne (131, 231) befindet; und
einen zweiten adhäsiven Abschnitt (151b, 251b) mit Corona-Oberflächenbehandlung an einem Randbereich, an dem sich die negative Elektrodenfahne (141, 241) befindet.

4. Elektrodenanordnung (100, 200) nach Anspruch 1, wobei es sich bei der Oberfläche des Separators (150, 250) um ein Gefüge handelt, bei dem die adhäsiven (151, 251) und nicht-adhäsiven (152, 252) Abschnitte abwechselnd angeordnet sind.

5. Elektrodenanordnung (100, 200) nach Anspruch 1, wobei der adhäsive Abschnitt (151, 251) auf einer oder beiden Seiten des Separators (150, 250) ausgebildet ist.

6. Elektrodenanordnung (100, 200) nach Anspruch 1, wobei eine Fläche, in der der adhäsive Abschnitt (151, 251) ausgebildet ist, im Bereich von 10 % bis 70 % einer Fläche des Separators (150, 250) liegt.

7. Elektrodenanordnung (100, 200) nach Anspruch 1, wobei der adhäsive Abschnitt (151, 251) ein Muster bildet, und
das Muster mindestens eines aus einem streifenförmigen Muster, einem gitterförmigen Muster, einem punktförmigen Muster und einem polygonförmigen Muster ist.

8. Sekundärbatterie, umfassend die Elektrodenanordnung (100, 200) nach Anspruch 1.

9. Sekundärbatterie nach Anspruch 8, wobei es sich bei der Sekundärbatterie um eine Sekundärbatterie vom Pouch-Typ handelt.

10. Verfahren zum Herstellen einer Elektrodenanordnung (100, 200) für eine Sekundärbatterie, umfassend:
Oberflächenbehandlung durch Durchführung einer Coronaentladung auf einer oder beiden Seiten des Separators (150, 250);
Bilden einer Einheitszelle, die eine positive Elektrode (130, 230), eine negative Elektrode (140, 240) und einen Separator (150, 250) umfasst, der zwischen der positiven (130, 230) und der negativen (140, 240) Elektrode angeordnet ist; und
Anordnen von n Einheitszellen, wobei n eine ganze Zahl größer oder gleich 2 ist, auf einer folienartigen Separatorfolie (160, 260) und Wickeln der Separatorfolie (160, 260) in einer Richtung,
wobei der in der Einheitszelle eingebettete Separator (150, 250) einen adhäsiven Abschnitt (151, 251) mit Corona-Oberflächenbehandlung und einen nicht-adhäsiven Abschnitt (152, 252) ohne Corona-Oberflächenbehandlung umfasst,
wobei es sich bei der Separatorfolie (160, 260) um ein Gefüge ohne Corona-Oberflächenbehandlung handelt.

11. Verfahren zum Herstellen einer Elektrodenanordnung (100, 200) für eine Sekundärbatterie nach Anspruch 10, wobei die Oberflächenbehandlung durch Elektrisieren der Oberfläche des Separators (150, 250) mittels eines Plasmagenerators (170) erfolgt.

12. Verfahren zum Herstellen einer Elektrodenanordnung (100, 200) für eine Sekundärbatterie nach Anspruch 10, wobei bei einer Coronaentladung der Entladungsbereich im Bereich von 1,0 bis 3,0 kV liegt.

13. Verfahren zum Herstellen einer Elektrodenanordnung (100, 200) für eine Sekundärbatterie nach Anspruch 10, wobei bei einer Coronaentladung die Entladungsmenge im Bereich von 30 bis 300 W-min/m² liegt.

## Revendications

1. Ensemble d'électrodes (100, 200) comprenant : une structure empilée ayant n cellules unitaires empilées incluant une électrode positive (130, 230), une électrode négative (140, 240), et un séparateur (150, 250) interposé entre les électrodes positive (130, 230) et négative (140, 240), dans lequel n est un entier supérieur ou égal à 2, et une feuille de séparateur (160, 260) est disposée entre les cellules unitaires,
le séparateur (150, 250) incorporé dans une cellule unitaire, incluant une partie adhésive (151, 251) avec un traitement de surface par effet couronne et une partie non adhésive (152, 252) sans traitement de surface par effet couronne,
dans lequel la feuille de séparateur (160, 260) est une structure sans traitement de surface par effet couronne.

2. L'ensemble d'électrodes (100, 200) selon la revendication 1, dans lequel la feuille de séparateur (160, 260) est une structure enroulée entre les cellules unitaires empilées, enveloppée autour des cellules unitaires.

3. L'ensemble d'électrodes (100, 200) selon la revendication 1, dans lequel les cellules unitaires comprennent :
une languette d'électrode positive (131, 231) formée s'étendant dans une première direction de l'électrode positive (130, 230) ; et
une languette d'électrode négative (141, 241) formée s'étendant dans une première direction de l'électrode négative (140, 240) ; et
dans lequel le séparateur (150, 250) comprend :
une première partie adhésive (151a, 251a) avec un traitement de surface par effet couronne au niveau d'une zone de bord où la languette d'électrode positive (131, 231) est située ; et
une seconde partie adhésive (151b, 251b) avec un traitement de surface par effet couronne au niveau d'une zone de bord où la languette d'électrode négative (141, 241) est située.

4. L'ensemble d'électrodes (100, 200) selon la revendication 1, dans lequel la surface du séparateur (150, 250) est une structure dans laquelle les parties adhésives (151, 251) et non adhésives (152, 252) sont agencées en alternance.

5. L'ensemble d'électrodes (100, 200) selon la revendication 1, dans lequel la partie adhésive (151, 251) est formée sur un ou deux côtés du séparateur (150, 250).

6. L'ensemble d'électrodes (100, 200) selon la revendication 1, dans lequel une zone dans laquelle la partie adhésive (151, 251) est formée est dans la plage de 10 % à 70 % d'une zone du séparateur (150, 250).

7. L'ensemble d'électrodes (100, 200) selon la revendication 1, dans lequel la partie adhésive (151, 251) forme un motif, et
le motif est au moins un parmi un motif de type à bandes, un motif de type grille, un motif de type à points, et un motif de type polygonal.

8. Une batterie secondaire comprend l'ensemble d'électrodes (100, 200) de la revendication 1.

9. La batterie secondaire de la revendication 8, dans laquelle la batterie secondaire est une batterie secondaire de type poche.

10. Un procédé de fabrication d'un ensemble d'électrodes (100, 200) pour une batterie secondaire comprenant :
le traitement de surface en effectuant une décharge couronne sur un ou les deux côtés du séparateur (150, 250) ;
la formation d'une cellule unitaire incluant une électrode positive (130, 230), une électrode négative (140, 240), et un séparateur (150, 250) interposé entre les électrodes positive (130, 230) et négative (140, 240) ; et
la disposition de n cellules unitaires, dans lequel n est un entier supérieur ou égal à 2, sur une feuille de séparateur de type feuille (160, 260) et l'enroulement de la feuille de séparateur (160, 260) dans une direction,
dans lequel le séparateur (150, 250) incorporé dans la cellule unitaire comprend une partie adhésive (151, 251) avec un traitement de surface par effet couronne et une partie non adhésive (152, 252) sans traitement de surface par effet couronne,
la feuille de séparateur (160, 260) est une structure sans traitement de surface par effet couronne.

11. Le procédé de fabrication d'un ensemble d'électrodes (100, 200) pour une batterie secondaire selon la revendication 10, dans lequel le traitement de surface est effectué en électrisant la surface du séparateur (150, 250) via un générateur de plasma (170).

12. Le procédé de fabrication d'un ensemble d'électrodes (100, 200) pour une batterie secondaire selon la revendication 10, dans lequel dans une décharge couronne, la plage de décharge est dans la gamme de 1,0 à 3,0 kV.

13. Le procédé de fabrication d'un ensemble d'électrodes (100, 200) pour une batterie secondaire selon la revendication 10, dans lequel dans une décharge couronne, la quantité de décharge est dans la plage de 30 à 300 W-min/m².
